## Europäisches Patentamt
## European Patent Office
## Office européen des brevets

(19)

(11) Veröffentlichungsnummer: **0 284 834**
**A2**

(12) # EUROPÄISCHE PATENTANMELDUNG

(21) Anmeldenummer: 88103547.1

(22) Anmeldetag: 08.03.88

(51) Int. Cl.⁴ **B29C 65/18** , F16L 47/02 ,
//B29L23:22

(30) Priorität: 03.04.87 US 34895

(43) Veröffentlichungstag der Anmeldung:
05.10.88 Patentblatt 88/40

(84) Benannte Vertragsstaaten:
**AT BE CH DE ES FR GB GR IT LI LU NL SE**

(71) Anmelder: **GEORG FISCHER
AKTIENGESELLSCHAFT
Mühlentalstrasse 105
CH-8201 Schaffhausen(CH)**

(72) Erfinder: **Rianda, Kent Allen
8751 Charford Drive
Huntington Beach California 92636(US)**
Erfinder: **Saunders, Vince
2014 Lemnos Drive
Costa Mesa California 92626(US)**
Erfinder: **Kunz, Peter
Breitenaustrasse 156
CH-8200 Schaffhausen(CH)**

(54) **Einrichtung und Verfahren zum Schweissen von rohrförmigen Teilen aus Kunststoff.**

(57) Zum Verschweissen von rohrförmigen Teilen (201, 203) aus Kunststoff, wird auf die mit ihren Stirnseiten aneinanderliegenden Verbindungsenden eine deren Aussenumfang umschliessende Schweisseinrichtung (50) aufgesetzt. Die Innenwand der Teile (201, 203) wird durch eine aufblasbare Blase (60) mit einer radial nach Aussen gerichteten Kraft abgestützt. Die Schweisseinrichtung (50) weist eine mittlere Heizzone (67) und beidseits benachbarte Kühlzonen (87, 95) auf, mittels welchen in einer Schmelzzone das Material über den Material-Erweichungspunkt erhitzt wird und in den beiden angrenzenden Zonen die Temperatur eindeutig unterhalb dem Material-Erweichungspunkt gehalten wird. Durch die allseitig eingeschlossene Schmelzzone entsteht ein Schweissdruck, der eine feste, wulstfreie Schweissverbindung gewährleistet.

FIG. 9

## Einrichtung und Verfahren zum Schweissen von rohrförmigen Teilen aus Kunststoff

Die Erfindung betrifft eine Einrichtung zum Schweissen von rohrförmigen Teilen aus Kunststoff gemäss dem Oberbegriff von Anspruch 1 sowie ein Verfahren zur Herstellung einer Schweissverbindung.

Kunststoff Rohrleitungssystemkomponenten, die aus einer Vielzahl unterschiedlicher thermoplastischer Materialien hergestellt sind, werden in den verschiedensten Anwendungsbereichen benützt, wobei hierfür die vorteilhaften Eigenschaften der thermoplastischen Materialien, wie z.B. die Korrosionsresistenz, Verunreinigungsbeständigkeit, verminderte Kosten, Installationsfreudigkeit und geringes Gewicht ausgenützt werden.

Bekannt ist das Verbinden von Kunststoff Rohrleitungssystemkomponenten mittels mechanischen Verbindungen, Klebverbindungen und/oder Schweissverbindungen.

Beispiele von mechanischen Verbindungen sind z.B. Schraubverbindungen, Klemmverbindungen und Flanschverbindungen. Ein Beispiel des Verbindens mit einem Lösungsklebstoff wäre das Auftragen eines Klebers auf einem Rohr, das dann in einen Fitting oder eine Armatur eingesteckt wird. Ein Beispiel für eine Schweissverbindung mittels Wärme ist eine Stumpfschweissverbindungen zwischen den Enden rohrförmiger Teile. Solche Stumpfschweissverbindungen sind meistens schwach und weisen am Innen-als auch am Aussenumfang Schweisswülste auf.

Ein weiteres Beispiel eines Schweissverfahrens ist das Muffenschweissen, wobei die erhitzten Enden rohrförmiger Teile in eine Muffe eingesteckt werden.

Bei Rohrleitungssystemen für die Weiterleitung von Medien mit hohem Reinheitsgrad, wie z.B. der Halbleiter-, Lebensmittel-, Arzneimittel-, biotechnische Industrie und bei der Herstellung von Chemikalien ist es wichtig, dass Verunreinigungen vermieden werden. Mechanische Verbindungen sind bei derartigen Systemen zwar verwendet worden, aber sie erfordern einen häufigen Ausbau für Reinigungszwecke, weil die mechanischen Verbindungselemente Nuten und Hohlräume aufweisen, wo sich Verschmutzungen leicht festsetzen können.

Die Verwendung von Lösungsklebstoff zur Herstellung von Muffen-Klebeverbindungen ergibt ebenfalls Verunreinigungsprobleme, weil interne Nuten oder Hohlräume leicht entstehen können. Kontamination oder potentielles kontaminierendes Material könnte sich leicht in solchen Nuten oder Hohlräumen festsetzen. In solchen Nuten und Hohlräumen kann sich Nahrung für Bakterien festsetzen und somit für eine Vermehrung von Bakterien sorgen.

Die Verwendung von bekannten Wärmeschweissverbindungsmethoden bei Hochreinheitssystemen ergeben auch ein Verunreinigungsproblem, weil unerwünschte Nuten, Hohlräume oder auch Wülste entstehen bzw. geformt werden können. Kontamination oder potentiell kontaminierendes Material könnte in solchen Nuten und Hohlräumen steckenbleiben. Als Resultat sind Versuche gemacht worden, um Wärmeschweissverbindungen zur Verfügung zu stellen, die Innen glatt und frei von Nuten und Hohlräumen sind. Solche Versuche erfordern die Verwendung von irgend einer Art von Innen-Stützvorrichtung, um die Rohrleitungssystemkomponenten-Enden zu stützen während sie beim Schweissprozess erhitzt werden. Z.B. sind ausweitbare Dorne, die eingesteckt und bis zum Innendurchmesser ausgedehnt werden, verwendet worden. Eine wichtige Ueberlegung bei der Verwendung von inneren Stützapparaten ist die notwendige Planung um sicherzustellen, dass die Stützvorrichtung nach der Verbindung der Rohrleitungskomponenten entfernt werden kann. Wenn z.B. die Rohrleitungssystemkomponenten, die verbunden werden, rechtwinkelige Verbindungen aufweisen, die bereits angeordnet sind, ist die Entfernung der Stützen ein Problem. Auch die Tatsache, dass Stützglieder am inneren der zu verbindenden Rohrleitungssystemkomponenten angeordnet sind, entsteht ein Verunreinigungsproblem.

Aufgabe der vorliegenden Erfindung ist die Schaffung einer Einrichtung und eines Verfahrens der eingangs genannten Art, mittels welcher Schweissverbindungen ohne die Verwendung von Muffen auch bei Hochreinheits-Kunststoff-Rohrleitungssystemen erstellbar sind,
- welche unter Verwendung einer leicht entfernbaren und nicht kontaminierenden inneren Stützvorrichtung im Innendurchmesser glatte und ohne Nuten, Hohlräume und Wülste aufweisende Schweissverbindungen ergibt,
- wobei die Schweisseinrichtung zuverlässig am Installationsort verwendbar ist und wobei das Verfahren ein unkontaminiertes Verschweissen ermöglicht, welches auch bei leicht oxidierbaren thermoplastischen Materialien verwendet werden kann.

Erfindungsgemäss wird diese Aufgabe durch die kennzeichnenden Merkmale des Einrichtungsanspruches 1 und der Verfahrensansprüche gelöst.

Die erfindungsgemässe Schweissvorrichtung gewährleistet die Herstellung von Schweissverbindungen von stumpf aneinanderstossenden Enden rohrförmiger Teile aus einem thermoplastischen Werkstoff.

Durch die mittlere Heizzone und den beidseitigen Kühl-bzw. Temperierzonen der Schweisseinrichtung wird ein Temperatur-Profil in den rohrförmigen Teilen erreicht, durch welches ein Aufschmelzen des Materials an den zusammenstossenden Enden im gesamten Wandstärkenbereich entsteht und ein Temperaturübergang zu den nicht aufgeschmolzenen Rohrteilen einstellbar ist. Dies gewährleistet spannungsarme Schweissverbindungen.

Durch die Anordnung von Stützmitteln im Innern der rohrförmigen Teile und die den Aussenumfang umschliessende Schweisseinrichtung ist der Aufbau eines Schweissdruckes gewährleistet, so dass eine einwandfreie Verschmelzung der Enden gewährleistet ist.

Durch die Stützeinrichtung werden auch Wülste am Innenumfang der Schweissverbindung vermieden, wobei durch deren Ausbildung als aufblasbare Blase deren Entfernen aus den rohrförmigen Teilen nach dem Schweissen gewährleistet ist.

Die Erfindung ist in mehreren Ausführungsbeispielen in den Zeichnungen dargestellt und nachfolgend beschrieben. Es zeigen:

Fig. 1 Eine perspektivische Ansicht einer Einrichtung zum Verschweissen von rohrförmigen Teilen aus Kunststoff

Fig. 2 einen Querschnitt entlang der Linie 2-2 von Fig. 1

Fig. 3 einen Längsschnitt der Einrichtung von Fig. 1 entlang der Linie 3-3 von Fig. 2 mit einem Diagramm des Temperaturprofils, welches die Einrichtung am Innenumfang der stumpf aneinanderstossenden Enden der rohrförmigen Teile bewirkt

Fig. 4 eine perspektivische Ansicht einer aufblasbaren Blase, welche für die innere Abstützung der rohrförmigen Enden in Zusammenarbeit mit der Einrichtung von Fig. 1 benutzt wird

Fig. 5 einen Längsschnitt einer Ausführungsvariante einer aufblasbaren Blase

Fig. 6A einen Teil-Längsschnitt einer Ausführungsvariante der in der Fig. 1 gezeigten Einrichtung

Fig. 6B einen Querschnitt entlang der Linie 6B-6B der Fig. 6A

Fig. 7A einen Teil-Längsschnitt einer weiteren Ausführungsvariante der in Fig. 1 gezeigten Einrichtung

Fig. 7B eine Seitenansicht teils im Querschnitt entlang der Linie 7B-7B von Fig. 7A

Fig. 8 eine Klemmeinrichtung für die zu verschweissenden rohrförmigen Teile zusammen mit der Einrichtung zum Verschweissen gem. Fig. 1 und eine aufblasbare Blase

Fig. 9 einen Schnitt entlang der Linie 9-9 von Fig. 8

Fig. 10 einen Querschnitt entlang der Linie 10-10 von Fig. 9 und

Fig. 11 eine perspektivische Darstellung der in Fig. 8 gezeigten Klemmeinrichtung.

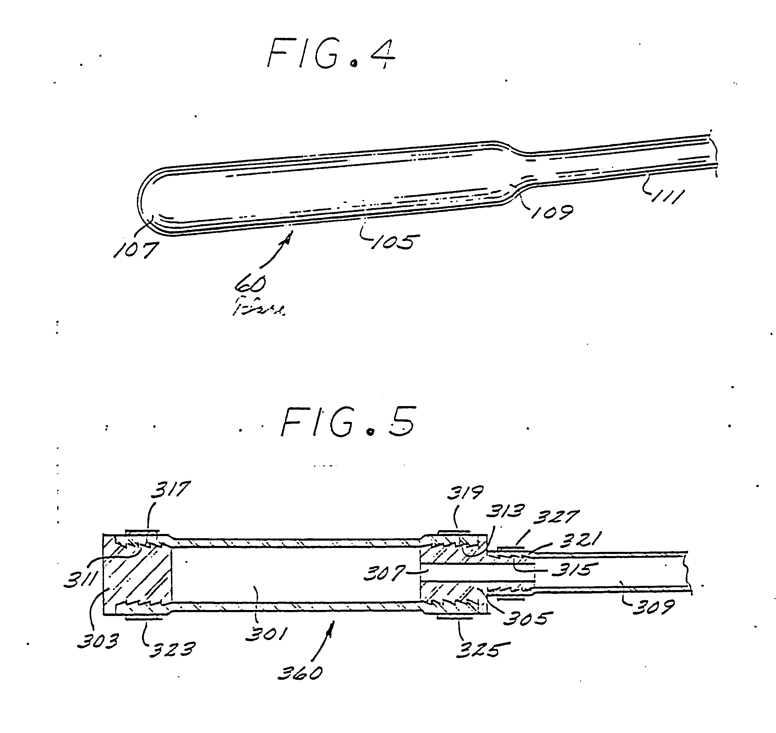

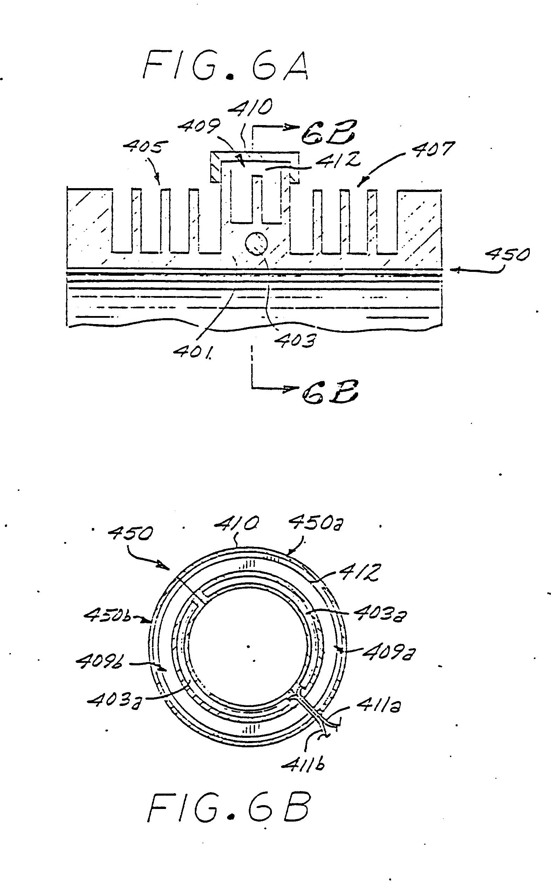

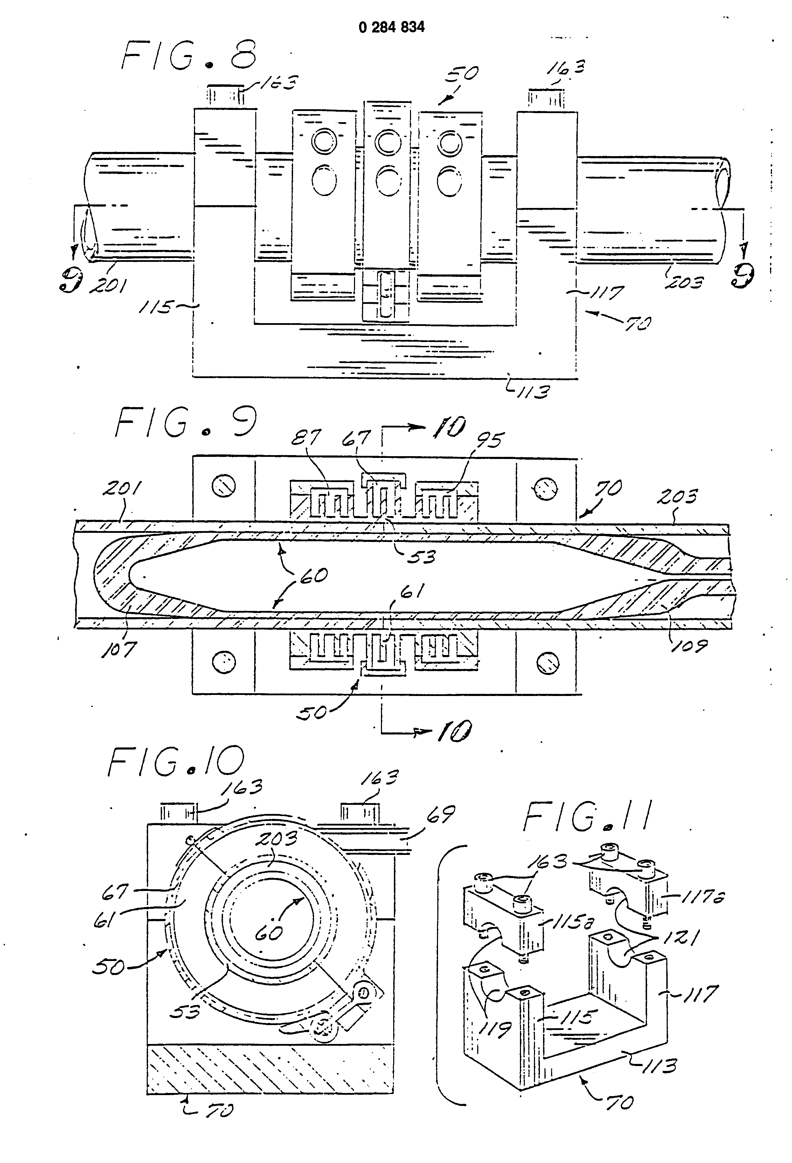

Die gesamte Einrichtung zum Verschweissen von stumpf aneinanderliegenden Enden rohrförmiger Teile 201, 203 weist gemäss der Fig. 8 eine U-förmige Klemmeinrichtung 70, eine Schweisseinrichtung 50 und eine aufblasbare Blase 60 entsprechend den Fig. 4 oder 5 auf, wobei die Blase 60 stützungsweise im Rohrinnern, wie in Fig. 9 ersichtlich, angeordnet ist. Die Schweisseinrichtung 50 weist gem. Fig. 9 im Querschnitt gesehen zentrale Heiz-Rillen 67 und angrenzende Kühlungsrillen 87 und 95 auf, mittels welchen das Temperatur-Profil 30 gemäss Fig. 3 in den stumpf aneinanderliegenden Rohrverbindungsenden erzeugt wird. Zur gleichen Zeit, wenn durch Hitze vonder zentralen Heiz-Rille 67 die Schmelzzone der stumpf aneinanderstossenden Enden über den Material-Erweichungspunkt gesteuert wird, wirkt Kühlungs-Flüssigkeit, die durch die Kühlungsrillen 87 und 95 fliesst auf die angrenzenden Rohrteile und gewährleistet, dass die Temperatur eindeutig unterhalb dem Material-Erweichungspunkt gehalten wird. Als Alternative kann die Kühlung der der Schmelzzone angrenzenden Rohrteile durch Wärmeabstrahlung an die Umgebungsluft erfolgen. Eine deutliche Verbes serung der Schweissprozessregelung und eine folglich einheitlichere Schweissverbindung von höherer Qualität wird dadurch erreicht.

Die beschriebene Schweisseinrichtung dient zum Verbinden thermoplastischer Rohrleitungssystemkomponenten, wie z.B. von Rohrenden, Fittingenden und Armaturenenden aus einem thermoplastischen Material wie z.B. aus Polypropylen, Polyethylen, Polybuten, Polyvinylfluorid, Plyvinylacetat, Aethylen-Tetrafluoräthylen-Copolymere, Polyvinylchlorid, Acrylnitril-Butadien-Styrol-Copolymere oder aus Mischungen dieser Materialien.

Die erwähnten Materialien sind "thermoplastisch", wobei sie eine thermische Ausdehnung bei Erwärmung aufweisen, und fliessen bei einer jeweiligen Temperatur, die als Materialerweichungstemperatur bzw. Schmelztemperatur bekannt ist und vom jeweiligen Material abhängig ist.

Mit allgemeinem Bezug auf die weitere Beschreibung werden die stumpf aneinanderliegenden Stirnflächen der Verbindungsenden als "Grenzfläche" bezeichnet, während dem die gesamte Endregion, welche zugleich die Stirnflächen sowie Teile der Enden einschliesst, die verschmolzen werden sollen, als Schmelzzone benannt wird. Der gesamte Endbereich der Verbindungsenden, die erhitzt und gekühlt werden, werden als "thermisch geregelte Zone" bezeichnet, wobei diese die zentral angeordnete Schmelzzone einschliesst.

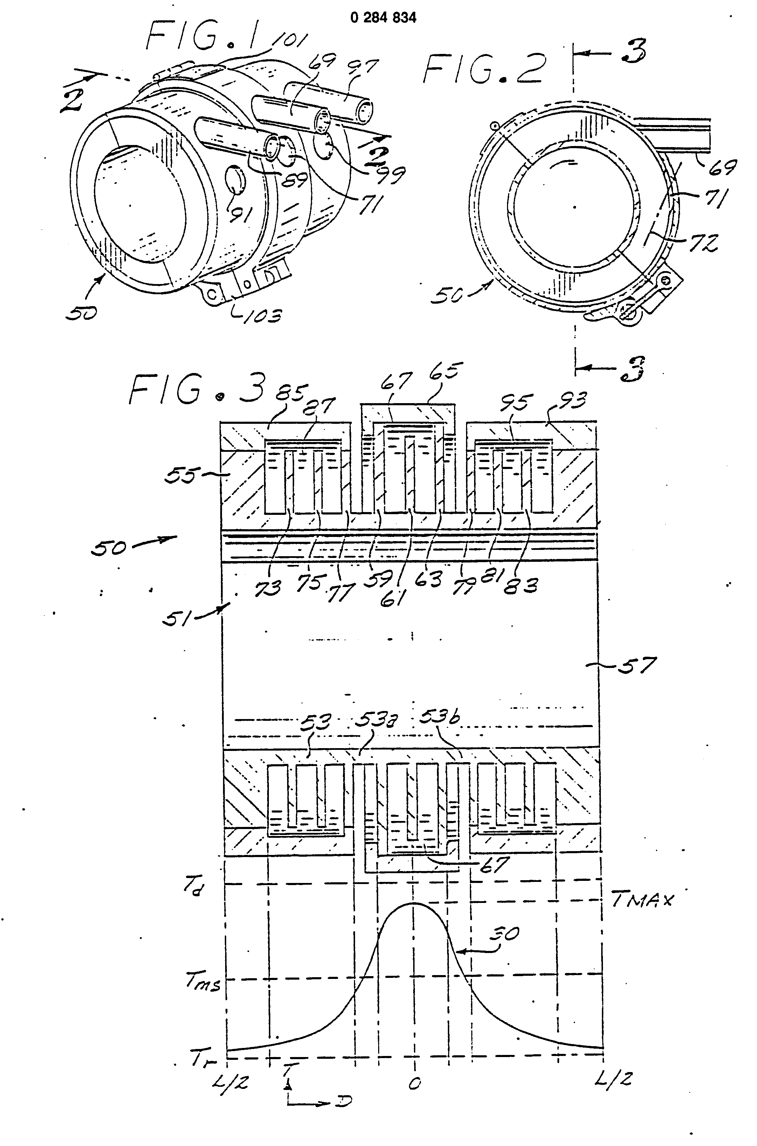

Gem. den Fig. 1 bis 3 weist die Schweisseinrichtung 50 einen ringförmigen Kern 51 auf. Der ringförmige Kern 51 weist eine längsweise ausdehnende dünne Wand 53 mit dickeren Endwandteilen 55 auf, welche ein zylindrisches Loch 57 formt, um die Verbindungsenden von rohrförmigen Teilen aufzunehmen.

Die Schweisseinrichtung 50 weist weiter mittig angeordnete, radial nach Aussen sich erstreckende ringförmige Rippen 59, 61, 63 auf, wobei die mittlerste Rippe 61 radial etwas kleiner ist als die beiden äusseren Rippen 59, 63. Eine mittlere, ringförmige Abdeckungsstruktur 65 wird über den äusseren Rippen 59, 63 befestigt, um eine zentrale, ringförmige, Flüssigkeit oder ein gasförmiges Medium leitende Rille 67 zu bilden.

Ein Einlass-Rohr 69 ist an der mittleren, ringförmigen Abdeckung 65 befestigt, wobei dessen Rohr-Achse tangential ungefähr in der Mitte der zentralen ringförmigen Rille 67 verläuft. Eine Auslassöffnung 71 ist in der ringförmigen Abdeckungsstruktur 65 unter dem zentralen Einlassrohr 69 angeordnet.

Wie in Fig. 2 dargestellt, verläuft die zentrische Achse 72 der Oeffnung 71 tangential zur ungefähren Mitte der ringförmigen Rille 67. Die Auslassöffnung 71 ist nahe am Einlassrohr 69 angeordnet um so zu ermöglichen, dass däs Medium, welches in die Rille 67 durch das Einlassrohr 69 eingeleitet wird um fast einen ganzen Kreis fliessen muss, bevor sie die Möglichkeit hat, durch die Auslass-Oeffnung 71 abzufliessen. Die Oeffnung des Einlassrohres 69 und die Auslassöffnung 71 sind so dimensioniert, dass eine rapide Luft-Bewegung innerhalb der Rille 67 mit wenig Druckabfall ermöglicht wird.

Die ringförmige Abdeckungsstruktur 65 kann beispielsweise durch Friktion oder mit einem passenden hoch-temperatur Klebstoff befestigt sein.

Die Schweisseinrichtung 50 weist weiter eine erste Gruppe radial nach Aussen sich erstreckende, ringförmige Rippen 73, 75, 77 und eine zweite Gruppe entsprechender ringförmiger Rippen 79, 81, 83 auf. Die erste und zweite Gruppe von Rippensind auf beiden Seiten der mittleren Rippen 59, 61, 63 angeordnet. Die Teile der dünnen Wand 53 zwischen den mittleren Rippen und den Gruppen der äusseren Rippen sind als Brückenzonen 53a, 53b bezeichnet.

Eine aussenliegende ringförmige Abdeckungsstruktur 85 ist über die erste Gruppe der Rippen 73, 75, 77 befestigt und reicht von der innersten Rippe 77 bis zur äusseren dickeren Endwand 55 um eine aussenliegende ringförmige, ein Medium leitende Rille 87 zu bilden. Ein aussenliegendes Einlassrohr 89 ist an der ringförmigen Struktur 85 mit gleicher Ausrichtung, wie das mittige Einlass-Rohr 69 befestigt. Die ringförmige Abdeckungsstruktur 85 weist weiter eine Auslassöffnung 91 mit gleicher Ausrichtung wie die Auslassöffnung 71 auf. Die Oeffnungen des aussenliegenden Einlassrohres 89 und die Auslassöffnung 91 sind so dimensioniert, dass eine rapide Luftbewegung innerhalb der Rille 87 mit wenig Druckabfall ermöglicht wird.

Eine aussenliegende ringförmige Abdeckungsstruktur 93 ist über der zweiten Gruppe der Rippen 79, 81, 83 befestigt und von der innersten Rippe 79 bis zur äusseren dickeren Endwand 55 um eine aussenliegende ringförmige, ein Medium leitende Rille 95 zu bilden. Ein aussenliegendes Einlassrohr 97 ist an der ringförmigen Abdeckungsstruktur 93 mit gleicher Ausrichtung, wie das mittige Einlassrohr 69 befestigt. Die ringförmige Abdeckungsstruktur 93 weist weiter eine Auslassöffnung 99 mit gleicher Ausrichtung wie die Auslassöffnung 71 auf. Die Oeffnung des aussenliegenden Einlassrohres 97 und die Auslassöffnung 99 sind so dimensioniert, dass eine rapide Luftbewegung innerhalb der Rille 95 mit wenig Druckabfall ermöglicht wird.

Durch die innere Wand 53, den Rillen 67, 87 und 95 und die Abdeckungsstrukturen 65, 85, 93 entstehen Kammern, welche die thermisch geregelte Region bilden.

Die gesamte Schweisseinrichtung 50 ist in Längsrichtung getrennt, wodurch zwei halbkreisringförmige Teile entstehen. Jedes Teil weist daher halbkreisförmige Oeffnungen auf, um die Enden der zu verbindenden rohrförmigen Teile aufzunehmen. Eine Drehachse 101 ist an der Aussenseite der mittigen ringförmigen Abdeckungsstruktur 65 befestigt, um ein Oeffnen und Schliessen der beiden Teile der Schweisseinrichtung 50 zu ermöglichen. Ein verriegelbarer Mechanismus 103, schematisch als Schnellauslösungsgelenk-Riegel dargestellt, ist an der Abdeckung 65 gegenüber der Drehachse 101 befestigt. Der Verriegelungsmechanismus 103 dient zur Befestigung der Schweisseinrichtung 50 auf den zu verbindenden rohrförmigen Teilen 201, 203 wie in Fig. 8 dargestellt.

Mittels der auf den rohrförmigen Teilen angeordneten Schweisseinrichtung 50, welche als thermische Uebertragungsstruktur zu betrachten ist, erfolgt die Uebertragung der thermischen Energie zur Schmelzzone, um die Material-Erweichungs-Temperatur zu erreichen, wobei gleichzeitig die beidseits angrenzenden Partien thermisch so geregelt bzw. gekühlt werden, dass in diesen Bereichen die Material-Erweichungs-Temperatur nicht erreicht wird.

Für die unterschiedliche Tempertaurzuführung weist die Schweisseinrichtung 50 die drei Rillen 67, 95 und 87 auf, wobei die mittlere Rille 67 für die Zuführung der thermischen Energie zur Erzeugung der Material-Erweichungstemperatur vorgesehen ist und die beidseits angrenzenden Rillen 87 und 95 für die Temperierung bzw. Kühlung der an die Schmelzzone angrenzenden Partien der rohrförmigen Teile dienen. Durch die Rillen 67, 95 und 87 wird ein Uebertragungsmedium geleitet, welches entweder eine Flüssigkeit oder ein Gas vorzugsweise entsprechend temperierte Luft sein kann.

Für eine gute thermische Uebertragung der Temperatur des Uebertragungsmediums auf die rohrförmigen Teile, werden die entsprechenden Teile der Schweisseinrichtung 50 aus einem thermisch gut leitenden Metall, wie z.B. Aluminium oder Kupfer hergestellt. Dadurch können die Heiz- und Kühlzeiten wesentlich reduziert werden. Die mittlere Abdeckungsstruktur 65 weist dabei vorzugsweise auf der Innenseite eine Schicht aus thermisch gut leitendem Material und auf der Aussenseite eine Schicht aus passendem Isoliermaterial auf. Als Alternative weist die einfach Eloxierung der Aussenflächen einer einschichtigen Aluminium-Abdeckung eine gute Verringerung der Wärmeabstrahlung nach aussen auf.

Der zentrische Kern 51 ist vorzugsweise aus einem Metall mit einem thermischen Leitwert in dem Bereich zwischen Kupfer als höchstem Wert und Edelstahl als niedrigstem Wert hergestellt. Verschiedene Teile des Zentralkerns 51 können auch aus verschiedenen Metallen hergestellt werden, um die erwünschten thermischen Leitfähigkeiten zu erreichen.

Mit Ausnahme der Brückenzonen 53a und 53b ist die Dicke der dünnen Wand 53 des Zentralkerns 51 vorzugsweise so dünn wie möglich auszubilden, um so die thermische Masse der Schweisseinrichtung 50 zu reduzieren, wodurch die Heiz-und Kühlzeiten reduzierbar sind und auch die Heizübertragung zu den Enden der Schweisseinrichtung 50 sich reduziert. Die minimalste Wandstärke der Wand 53 müsste mindestens so gross gewählt werden, dass keine Deformationen beim Aufklemmen der Schweisseinrichtung auf die rohrförmigen Teile entstehen. Dagegen ist die radiale Dicke der Brückenzonen 53a, 53b tatsächlich kritisch beim Schweissprozess und sollte proportional zum Durchmesser der Schweisseinrichtung angepasst sein. Vorzugsweise sollte die radiale Dicke der Brückenzonen 53a, 53b etwa 3% des Innendurchmessers des zylindrischen Loches 57 für alle Grössen betragen.

Als Beispiel könnten die Dimensionen einer Schweisseinrichtung 50 bei Verwendung für rohrförmige Teile mit einem Aussendurchmesser von 25 mm wie folgt betragen:

Der Innendurchmesser des zylindrischen Lochs 57 ist gleich bzw. gleich der entsprechend grössten Dimension des Rohraussendurchmessers, basierend auf seinen Herstellungstoleranzen. Der Aussendurchmesser der Schweisseinrichtung 50 bei den Endwänden 55 und bei den ersten und zweiten Gruppen der Rippen ist 38,1 mm. Der Aussendurchmesser bei den grösseren mittigen Rippen 59, 63 ist ca. 44,5 mm und der Aussendurchmesser der mittlersten Rippe 61 ist ca. 40,6 mm. Die Länge der Schweisseinrichtung 50 ist 44,5 mm.

Die Dicke von jeder der Rippen beträgt ungefähr 1 mm. Der Abstand zwischen den Rippen beträgt im allgemeinen ca. 2,3 mm. Die Dicke der Endwände 55 beträgt 5 mm. Die Länge von jeder der Brücken 53a, 53b in Achsrichtung gemessen beträgt 3,5 mm. Die Dicke der dünnen Wand 53 des Kerns 51 ist ungefähr 0.9 mm. Die radiale Dicke der Brückenzonen 53a, 53b ist ungefähr 0,75 mm bei Rohraussendurchmessern von 25 mm oder ungefähr 3% des Innendurchmessers des zylindrischen Lochs 57 für alle Rohraussendurchmesser.

Die Schweisseinrichtung 50 ermöglicht eine längsweise differenzierte thermische Steuerung der thermisch geregelten Region der Verbindungsenden der rohrförmigen Teile während dem Verschweissen. Gemäss dieser thermischen Steuerung wird die zentrale Schmelzregion zumindest bis zum Material-Erweichungspunkt erhitzt, während die beiden längsseitig angrenzenden Teile eindeutig bei einer Temperatur unterhalb dem Material-Erweichungspunkt gehalten werden. Eine thermische Steuerung dieser Art bringt innerhalb der thermisch geregelten Region ein Wärmeprofil, wie es schematisch in Fig. 3 durch die Kurve 30 dargestellt wird.

In Fig. 3 stellt die senkrechte Achse T die Temperatur dar und die waagrechte Achse D den Abstand von der Mitte der Schweisseinrichtung 50 in Längsrichtung gesehen. Tms stellt den Material-Erweichungspunkt des thermoplastischen Materials der zu verbindenden rohrförmigen Teile dar, und das Symbol Td stellt die Zersetzungs-Temperatur solcher thermoplastischer Materialien dar. Das Symbol Tmax stellt die maximale Temperatur der Schmelzregion dar und das Symbol Tr stellt die Umgebungstemperatur dar. Das Symbol L/2 stellt eine Hälfte der Länge L der Schweissvorrichtung 50 dar. Die Länge der Schmelzzone ist der Bereich des Temperatur-Profils, welches grösser als der Material-Erweichungspunkt Tms ist. Wie gezeigt, ist die Länge der Schmelzzone geringer als die Länge L der Schweisseinrichtung 50.

Wie in Fig. 3 gezeigt, weist das vorgewälte Temperatur-Profil 30 ein Maximum in der Mitte der Schmelzregion auf und schwächt sich stetig und symmetrisch mit Abstand von der Mitte ab. Das vorgewählte Temperaturprofil 30 weist einen glatten Uebergang zwischen der Temperatur unterhalb des Material-Erweichungspunktes und der Temperatur über dem Material-Erweichungspunkt auf. Die Temperatur Tmax muss geringer als die Zersetzungstemperatur Td des thermoplastischen Materials sein.

Das vorgewählte Temperaturprofil 30 wird durch Zufuhr eines heissen Mediums, wie z.B. heisser Luft durch die mittige Rille 67 und mit der Zufuhr eines kühleren Mediums wie z.B. kühlere Luft in den äusseren Rillen 87, 95 erreicht.

Während die Temperaturen der zugeführten heissen Luft entsprechend dem thermoplastischen Material der zu verbindenden rohrförmigen Teile abhängt, kann die Temperatur der zugeführten Kühlluft in dem Bereich der Zimmertemperatur liegen, z.B. 15°C bis 25°C.

Wenn der Kern 51 aus einem Metall besteht, welches eine relativ hohe Wärmeleitfähigkeit aufweist, wie z.B. Aluminium, dann sollten vorzugsweise die äusseren ringförmigen Abdeckungsstrukturen 85, 93 und die Zuführung von Kühlungsluft verwendet werden. Wenn der Kern 51 aus einem Metall mit einer relativ niedrigen Wärmeleitfähigkeit besteht, wie z.B. Edelstahl, dann könnten die äusseren ringförmigen Abdeckungsstrukturen 85, 93 wegfallen, wobei die Kühlung durch Abstrahlung an die Umgebungsluft erfolgt, vorausgesetzt, dass die Umgebungsluft nicht extrem heiss oder kalt ist.

Die Fig. 4 zeigt eine Blase 60, welche im Inneren schematisch der zu verschweissenden rohrförmigen Teile beim Schweissen angeordnet wird. Diese Blase 60 ist im wesentlichen zylindrisch ausgebildet und ist als aufblasbare Blase 60 ausgebildet, welche mit einem Druck federnd an die Innenflächen der rohrförmigen Teile im Bereich der Schmelzzone anpassbar ist.

Die Blase 60 weist eine Umfangswand 105 und Endwände 107, 109 auf. Die eine Endwand 107 ist geschlossen während die Endwand 109 eine kleine Oeffnung aufweist, welche in Verbindung mit dem Inneren eines Schlauches 111 steht, welcher an der Endwand 109 befestigt ist. Die Aussenflächen der Blase 60 sollten sehr glatt sein, um eine nutenfreie Verbindung zwischen den Enden der rohrförmigen Teile zu gewährleisten.

Vorzugsweise sind die Umfangswand 105 und die Endwände 107, 109 vollständig aus einem Material hergestellt, welches den max. Temperaturen in dem Bereich der höchsten Schmelzpunkte des verwendeten thermoplastischen Materials standhalten kann. Das Material sollte auch ermüdungsbeständig gegen mehrfaches Aufblasen und genügend elastisch sein, damit es durch ein Rechtwinkelstück oder einen T-Fitting schiebbar ist. Im weiteren sollte das Material der Blase 60 möglichst wenig Wärme ableiten. Z.B. kann die Blase 60 aus einem Silikon oder Fluorsilikon-Elastomer hergestellt sein. Das Rohr 111 kann aus einem passenden Kunststoff mit einer normalen Zusammensetzung hergestellt sein, und kann integral mit der Blase 60 aus dem gleichen Material, z.B. in einem Spritzprozess hergestellt sein.

Vorzugsweise sollte die Länge der Blase 60 etwas grösser als die Länge der Schweisseinrichtung 50 sein, so dass die Blase 60 die Enden der rohrförmigen Teile an den Innenflächen mit einer auswärts gerichteten radialen Kraft über die thermisch geregelte Region hinaus unterstützt. Der Aussendurchmesser der Blase 60 sollte sieben Achtel vom Innendurchmesser der zu verschweissenden Rohrgrösse betragen. Die Dicke der Umfangswand 105 sollte die Hälfte der Rohrwanddicke betragen, während die Dicke der Endwände 107, 109 ein Sechstel des Aussendurchmessers der Blase 60 sein sollte.

Die Fig. 5 zeigt eine Ausführungsvariante einer aufblasbaren Blase 60. Hier weist die Stützpartie 360 einen flexiblen rohrförmigen Zwischenteil 301 auf, welcher zwischen den starren Endstopfen 303, 305 montiert ist. Nur die Umfangswand des elastischen Teils 301 ergibt bei Ausdehnung unter Druck den notwendigen unterstützenden Kontakt mit dem Umfang der thermisch geregelten Region. Das Druckgas wird durch einen Versorgungsschlauch 309 und ein Bohrloch 307 des Endstopfens 305 in das Zwischenteil 301 eingeleitet.

Die Endstopfen 303, 305 weisen am Umfang Verzahnungen 311, 313, 315 auf, in welche die Verzahnungen 317, 319, 321 eingreifen, die in den jeweiligen Enden des Zwischenteils 301 und des Versorgungschlauches 309 angeformt sind. Ein fester Halt in den Verzahnungen wird durch die Klemmbänder 323, 325, 327 erreicht.

Das elastische Zwischenteil 301 kann wieder aus einem Silikon oder Fluorsilikon-Elastomer hergetellt sein, die Stopfen 303, 305 können aus einem starren Kunststoff, und die Bänder 323, 325, 327 können aus Metall hergestellt sein.

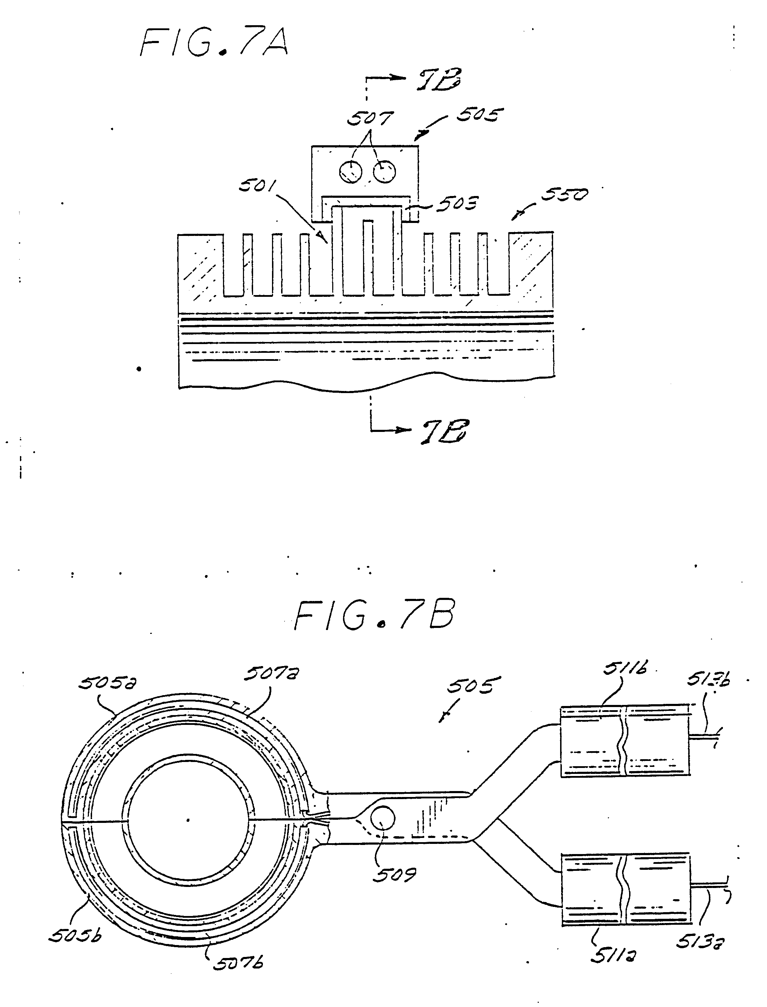

Ausführungsvarianten der in den Fig. 1 bis 3 gezeigten Schweisseinrichtung zeigen die Fig. 6 und 7, wobei die Schweisseinrichtungen die Positionen 450 und 550 aufweisen.

Gemäss Fig. 6A weist die Schweisseinrichtung 450 einen mittigen Heiz-Uebertragungsteil 401 mit einem integrierten Heizelement 403 auf, mittels welchem Teil 401 erhitzt wird. Das Heizelement 403 ist vorzugsweise eine elektrische Heizpatrone.

Wie bei der Schweisseinrichtung 50, weist die Einrichtung 450 wieder beidseits Gruppen von Kühlrippen 405, 407 auf, die für die Ableitung der Wärme während des Schweissvorganges ausgebildet sind. Die Schweisseinrichtung 450 weist eine mittlere Gruppe Rippen 409 und eine ringförmige Abdeckungsstruktur 410 auf, welche eine mittlere ringförmige Rille 412 bildet. Die Rille 412 ist für die Durchleitung eines Kühlmediums, wie z.B.

Kühlflüssigkeit oder Kühlluft, für die Kühlung der Schweisseinrichtung 450 nach dem Schweissvorgang ausgebildet. Durch diese Kühlung wird die Abkühlzeit und somit die gesamte Schweisszeit wesentlich verringert.

Die Anordnung des Heizelementes 403 in der in Längsrichtung geteilten Schweisseinrichtung 450 ist in Fig. 6B dargestellt, wobei die Schweisseinrichtung 450 aus zwei halbkreisförmigen Teilen 450a und 450b besteht. Das Heizelement 403 besteht ebenfalls aus zwei halbkreisförmigen Heizungsteilen 403a und 403b, welche mit elektrischen Anschlüssen 411a und 411b verbunden sind.

Die Fig. 7A und 7B zeigen eine weitere Schweisseinrichtung 550, welche eine mittige Gruppe Rippen 501 zur Zufuhr von Heizenergie während dem Schweissen aufweist, und weiter auch zur Abfuhr von Wärme während der Kühlung nach dem Schweissen ausgebildet ist. Eine gut thermisch leitende ringförmige Abdeckung 503 ist um die mittige Gruppe Rippen 501 befestigt. Die ringförmige Abdeckung 503 wird durch eine unabhängige Heizvorrichtung 505 geheizt, welche die ringförmige Abdeckung 503 umschliesst. Als eigentliche Heizquellen dienen die Heizelemente 507, die im Inneren der Heizvorrichtung 505 angeordnet sind. Wie die Fig. 7B zeigt, ist die Heizvorrichtung 505 scherenförmig ausgebildet und weist zwei halbkreisförmige Teile 505a und 505b auf, die mit einem an Hebeln angeordneten Drehzapfen 509 gelenkig miteinander verbunden sind, wobei die Hebel zur Handbetätigung Griffteile 511a und 511b aufweisen. Elektrische Verbindungen 513a und 513b sind durch die jeweiligen Griffe geführt und mit den halbkreisförmigen Heizungssegmente 507a und 507b verbunden.

Die Kühlung der Schweisseinrichtung 550 nach dem Schweissvorgang wird durch ein zirkulierendes Medium wie z.B. Kühlungsflüssigkeit erreicht, welche durch die Rippen 501 und die Abdeckung 503 gebildete ringförmige Rille geleitet wird.

Die Fig. 8 bis 11 zeigen eine Klemmvorrichtung 70 für die Klemmung der zu verbindenden rohrförmigen Teile 201, 203. Diese weist einen U-förmigen Basiskörper mit einer Basiswand 113 und zwei parellelen Endwänden 115, 117 auf. Die Endwände 115, 117 weisen Oeffnungen 119, 121 und durch deren Mitte Trennebenen auf, wodurch die Endwände 115, 117 quergeteilt werden. Die oberen Teile 115a, 117a der Endwände sind abnehmbar, um die zu verbindenden rohrförmigen Teile 201, 203 aufzunehmen. Die oberen Teile 115a, 117a sind mittels Befestigungsschrauben 163 beidseits den Oeffnungen 119, 121 auf den Endwänden 115, 117 befestigbar.

Der Zweck der Klemmvorrichtung 70 ist, die zu verbindenden rohrförmigen Teile stirnseitig aneinanderliegend in axialer Ausrichtung fest zu halten.

Die vorgängig beschriebene Schweisseinrichtung 50, die aufblasbare Blase 60 und die Klemmvorrichtung 70 werden wie folgend beschrieben angewendet, um die rohrförmigen Teile 201, 203 zu verbinden. Die zu verbindenden Enden der Teile 201, 203 sind in der Klemmvorrichtung 70 mit ihren Stirnflächen aneinanderliegend zentrisch festgehalten. Die geleerte Blase 60 wird danach oder auch vor dem Klemmvorgang innerhalb der rohrförmigen Teile 201, 203 ungefähr mittig zu den aneinanderliegenden Stirnflächen angeordnet. Die Blase 60 wird dann bis zu einem genügenden Druck aufgeblasen, um das Deformationsfliessen des geschmolzenen thermoplastischen Materials nach Innen zu verhindern. Der erforderliche Aufblasdruck hängt von der Blase, vom Material und den Abmessungen der rohrförmigen Teile ab, wobei die Praxis gezeigt hat, dass ein Druck von ungefähr 207 kPa bis ungefähr 690 kPa vorteilhaft ist.

Wie in Fig. 9 dargestellt ist, wird die Schweisseinrichtung 50 um die Enden der zu verbindenden Teile 201, 203 befestigt, so dass sie an dem Aussenumfang der rohrförmigen Teile zentriert ist. Das Einbringen der Blase 60 kann auch nach dem Befestigen der Schweisseinrichtung 50 erfolgen.

Durch die Rille 67 der Schweisseinrichtung wird dann ein heisses Medium, wie z.B. heisse Luft geleitet, und, falls erforderlich, wird kühle Luft oder ein anderes kühles Medium in den aussenliegenden Rillen 87, 95 durchgeleitet.

Durch Uebertragung der Wärme fangen die Enden der rohrförmigen Teile 201, 203 zuerst auf der Aussenfläche neben den Stirnflächen an zu schmelzen. Im weiteren Verlauf der Heizung wächst die Schmelzzone axial sowie radial nach Innen durch die Wände der Enden 201, 203. Durch die Erwärmung und das Schmelzen dehnt sich das thermoplastische Material aus. Das schmelzende thermoplastische Material wird von der Innenfläche des Bohrloches 57 der Schweisseinrichtung 50 und der Aussenfläche der unter Druck gesetzten Blase 60, sowie durch die ungeschmolzenen Teile der Enden der rohrförmigen Teile 201, 203 gehalten als Resultat ihrer Befestigung in der Klemmvorrichtung 70. Durch die thermische Ausdehnung und die Kapselung der Schweisszone baut sich ein Schweissdruck auf, der zur Zusammenmischung der aufgeschmolzenen polymerischen Ketten im Stossbereich der rohrförmigen Teile führt.

Beispiele für angewendete Heizungs-und Kühlungsparameter bei der Verschweissung von rohrförmigen Teilen aus PVDF mit einem Durchmesser von 25 mm sind aus folgenden Tabellen ersichtlich:

Tabelle 1

a) Schweissperiode

1. Heiz-Mediums-Zufuhr durch die Rille 67:
Heizungs-Lufttemperatur    343° C
Heizungs-Luftdurchfluss    15 Liter/min.
Heizungs-Zeit    3 Minunten
2. Kühl-Mediums-Zufuhr durch die aussenliegenden Rillen 87, 95
Kühlungs-Lufttemperatur 22° C
Kühlungs-Luftdurchfluss 1,5 Liter/min.

b) Kühlungs-Periode nach dem Schweissen Zufuhr durch alle Rillen 67, 87, 95:    Kühlungs-Lufttemperatur    20° C
Kühlungs-Luftdurchfluss    30 Liter/min.
Kühlzeit    30 Sekunden

Die in obiger Tabelle angegebene Kühlungszeit von 30 Sekunden ist auschreichend, um eine vernünftige Verfestigungstemperatur von unterhalb 38°C zu erreichen. Die nach dem Schweissen vorgeschlagene Kühlungs-Durchflussrate von 30 Liter/min. sollte ungefähr doppelt so gross sein wie die erforderliche Heizungs-Durchflussrate beim Schweissen.

Mit dem beschriebenen Verfahren zur Herstellung einer stirnseitigen Schweissverbindung von rohrförmigen Teilen und der beschriebenen Schweisseinrichtung ist das induzierte axiale Temperaturprofil und die gesamte Heizzeit so regelbar, dass die Wände der Verbindungsenden komplett bis zur Fläche der Blase 60 durchgeschmolzen werden, wobei die Länge der Schweisszone von der Mitte der Schweissvorrichtung bis ungefähr zur Hälfte der Länge bis zu den Enden der Schweissvorrichtung geht. Wenn die Heizzeit zu kurz ist, werden nur die radial aussenliegenden Teile der Enden verschweisst, was eine schwache Verbindung und eine Nute am Innenumfang der Stirnfläche ergibt. Wenn die Heizzeit zu lang ist, reicht die Schmelzzone an der Aussenfläche der rohrförmigen Teile über die Enden der Schweisseinrichtung 50 hinaus und das aufgeschmolzene thermoplastische Material tritt aus deren Enden aus, wodurch ein Ring an beiden Enden der Schweisseinrichtung entsteht. Das Herausfliessen reduziert die Dicke der Rohrwände in der Verbindungszone auf Grund des Materialverlustes, was eine schwache Verbindung zur Folge hat.

Wenn das Temperaturprofil zwischen der heissen und der kühlen Zone einen zu steilen Anstieg aufweist, können innere Spannungen in der Verbindung entstehen, was eine spröde Verbindung zur Folge hat.

Ist das Temperatur-Profil zu flach, entsteht eine zu lange Schmelzzone bis über die Enden der Schweisseinrichtung hinaus noch bevor die Schmelzzone die Innenflächen der Rohrenden erreicht hat. die Folge ist eine dünne Wand bei der Schweissverbindung.

Die fertigen Schweissverbindungen sollten visuell überprüft werden, damit bei fehlerhaften Verbindungen notwendige Aenderungen in dem Temperaturprofil und bei der Heizzeit vorgenommen werden können. Das Temperatur-Profil und die Heizzeit hängen vom Typ des zu verbindenden thermoplastischen Materials, vom Material der Schweisseinrichtung und den verwendeten Temperaturen ab.

Bei geringem Spiel zwischen dem Innenumfang der Schweisseinrichtung und dem Aussenumfäng der zu verbindenden rohrförmigen Teile wird dieses durch Ausdehnung des thermoplastischen Materials nach einer gewissen Heizzeit aufgehoben. Wenn das Spiel grösser ist, muss die Heizzeit verlängert werden. Bei zu grossem Spiel kann kein Schweissdruck entstehen und es muss eine passende Schweisseinrichtung verwendet werden.

Es wurde festgestellt, dass zur Herstellung einer Schweissverbindung von stumpfaneinanderliegenden Enden rohrförmige Teile mit der beschriebenen Einrichtung eine präzise Stumpfstellung nicht unbedingt erforderlich ist, und dass ein kleiner Abstand bei den Stirnflächen toleriert werden darf. Auch dürfen nicht ganz rechtwinklige Stirnflächen toleriert werden. Ein zu grosser Abstand zwischen den Stirnflächen verringert jedoch die Menge des Materials, welches für die Schweissverbindung zur Verfügung steht.

Vorzugsweise sollten jedoch die Enden der zu verbindenden rohrförmigen Teile rechtwinklig geschnitten werden und keine Abschrägen aufweisen. Solche Abschrägen würden nur die Menge des thermoplastischen Materials, welches für die Schweissverbindung zur Verfügung steht, vermindern.

Die vorgehend beschriebene Erfindung weist folgende Vorteile auf:
- Die zuverlässige Bereitstellung von nutenfreien und wulstfreien Schweissverbindungen bei thermoplastischen Teilen.
- Die beschriebene Erfindung ist auch leicht an Baustellen verwendbar, um eine Schweissverbindung bei thermoplastischen Rohrleitungssystemen mit einfachen Mitteln herzustellen.

Die beschriebenen Ausführungsbeispielen können durch Modifizierung bzw. durch Kombination von Elementen durch weitere Ausführungsformen ergänzt werden, ohne dass diese dabei über den Umfang der Erfindung hinausgehen.

## Ansprüche

1. Einrichtung zur Herstellung einer Schweissverbindung von rohrförmigen Teilen aus Kunststoff, deren Verbindungsenden axial ausgerichtet sind und mit ihren Stirnflächen aneinanderliegend, gekennzeichnet durch:

- Stützmittel (60), das am Innenumfang der aneinanderstossenden rohrförmigen Teile (201, 203) anliegt, um eine geregelte radiale Kraft gegen die Innenflächen dieser Teile zu erzeugen, wobei die Anlagelänge grösser als die Schmelzregion ist,

- eine Schweisseinrichtung (50), welche am Aussenumfang die zu verbindenden rohrförmigen Teile und diesen umschliessend anbringbar ist und eine Länge aufweist, welche grösser als die Schmelzzone ist, wobei die Schweisseinrichtung eine mittlere Heizzone und beidseits je eine benachbarte Kühl-bzw. Temperierzone aufweist, mittels welchen längsweise ein geregeltes Temperaturprofil erzeugbar ist, wobei in einer Schmelzzone eine Erhitzung der Enden mindestens bis zum Material-Erweichungspunkt erfolgt und die angrenzenden Teile eindeutig unterhalb dem Material-Erweichungspunkt gehalten werden und wobei die Schmelzzone zwecks Aufbaues eines Schweisdruckes von der Schweisseinrichtung, vom Stützmittel und den nicht aufgeschmolzenen rohrförmigen Teilen fest umschlossen ist.

2. Einrichtung nach Anspruch 1, dadurch gekennzeichnet, dass das Stützmittel (60) elastische Partien aufweist, welche mindestens im Bereich der Schmelzzone an die Innenflächen der rohrförmigen Teile (201, 203) drückbar ist.

3. Einrichtung nach Anspruch 1 oder 2, dadurch gekennzeichnet, dass das Stützmittel aus einer unter Druck setzbaren aufblasbaren Blase (60) besteht.

4. Einrichtung nach Anspruch 3, dadurch gekennzeichnet, dass die Blase (60) aus Silikon besteht.

5. Einrichtung nach Anspruch 1, dadurch gekennzeichnet, dass die Heizzone Heiz-Rillen (67) für die Durchleitung eines thermische Energie übertragenden Heiz-Mediums aufweist.

6. Einrichtung nach Anspruch 5, dadurch gekennzeichnet, dass die mittig angeordnete ringförmige Heiz-Rille (67) innere Wärme leitende Rippen (61) aufweist.

7. Einrichtung nach Anspruch 1, dadurch gekennzeichnet, dass die Kühl-bzw. Temperierzonen Kühlrippen (405, 407) zur Wärmeabgabe an die Umgebung aufweist, welche zu beiden Seiten der mittig angeordneten Heiz-Rille (67) angeordnet sind.

8. Einrichtung nach Anspruch 1, dadurch gekennzeichnet, dass die Kühl-bzw. Temperierzonen ringförmige Rillen (87, 95) für die Durchleitung eines Kühlmediums aufweist, welche zu beiden Seiten der mittig angeordneten Heiz-Rille (67) angeordnet sind.

9. Einrichtung nach Anspruch 8, dadurch gekennzeichnet, dass die Rillen (87, 95) innere, Wärme leitende Rippen (73, 75, 81, 83) aufweisen.

10. Einrichtung nach Anspruch 1, dadurch gekennzeichnet, dass die Heizzone elektrische Heizelemente (403, 507) aufweist.

11. Einrichtung nach Anspruch 1, dadurch gekennzeichnet, dass die Schweisseinrichtung (50) in Achsrichtung zweiteilig ausgebildet ist, wobei jedes Teil halbkreisförmige Oeffnungen zur Aufnahme der rohrförmigen Teile aufweist.

12. Einrichtung nach Anspruch 11, dadurch gekennzeichnet, dass die beiden Teile am Aussenumfang angeordnete Gelenk-(101, 509) und Verriegelungs-Mechanismen (103) aufweisen.

13. Einrichtung nach Anspruch 12, dadurch gekennzeichnet, dass die mit dem Gelenk (509) verbundenen Teile Griffteile (511a, 511b) aufweisen, die für ein manuelles, hebelübersetztes Verschwenken der beiden Teile ausgebildet sind.

14. Verfahren zur Herstellung einer Schweissverbindung mit einer Einrichtung gemäss einem der Ansprüche 1 bis 13, gekennzeichnet durch die Verfahrensschritte:

a) Unterstützung der Innenflächen der Enden der zu verbindenden rohrförmigen Teile durch eine auswärts gerichtete radiale Kraft über einen Bereich, der in Längsrichtung grösser ist als die Schmelzzone und den Zusammenstossbereich der beiden Stirnflächen der rohrförmigen Teile einschliesst und

b) Zufuhr von Heizenergie bei einer längsweise differenzierten thermischen Steuerung der thermisch geregelten Region, welche in Längsrichtung beidseits über die Schmelzzone hinausgeht, wobei die mittige Schmelzzone zumindest bis zum Material-Erweichungspunkt erhitzt wird, während dem die beidseitigen, längsweise angrenzenden Teile der thermisch geregelten Region eindeutig bei Temperaturen gehalten werden, die unterhalb dem Material-Erweichungspunkt liegen.

15. Verfahren nach Anspruch 14, dadurch gekennzeichnet, dass die thermisch geregelte Zone der rohrförmigen Teile am Aussenumfang durch Umhüllung mit einer thermischen Uebertragungs-Einrichtung abgedeckt wird, um Material-Erweichungs-Energie zur Schmelzzone zu übertragen und effektive Ableitung der mittig aufgetragenen thermischen Energie von den beidseitig in Längsrichtung angrenzenden Teilen, um hier die Temperatur unterhalb dem Material-Erweichungspunkt zu halten, wobei die äussere Umhüllungsstruktur mit der inneren Stützkraft und den unverschmolzenen Teilen der rohrförmigen Teile die Schmelzzone zum Aufbau eines Schmelzdruckes fest umgrenzen.

16. Verfahren nach Anspruch 15, dadurch gekennzeichnet, dass die Zuführung der Heizenergie mittels eines flüssigen oder gasförmigen Mediums, vorzugsweise heisse Luft erfolgt.

17. Verfahren nach Anspruch 15, dadurch gekennzeichnet, dass die Zuführung der Heizenergie mittels elektrischer Energie erfolgt.

18. Verfahren nach Anspruch 14, dadurch gekennzeichnet, dass beidseits der mittigen Heiz-Energie-Zufuhr für die Schmelzzone die Temperatur durch Abfuhr von Wärme mittels eines Kühlmediums wie z.B. Kühlluft gesteuert wird.

19. Verfahren nach einem der Ansprüche 14 bis 18, dadurch gekennzeichnet, dass die Schmelzzone nach dem Heizen und Aufschmelzen des thermischen Materials durch ein Kühlmedium bis mindestens unterhalb des Material-Erweichungspunktes gekühlt wird.

FIG.1

FIG.2

FIG.3

0 284 834

# FIG. 4

107   60   105   109   111

# FIG. 5

317   319   313   327   321
311   307   315
303   323   301   305   309
360   325

0 284 834

FIG. 6A

FIG. 6B

FIG.7A

FIG.7B

FIG. 8

FIG. 9

FIG. 10

FIG. 11